# EUROPEAN PATENT APPLICATION

(11) **EP 4 600 838 A1**
(43) Date of publication of application: **13.08.2025**
(21) Application number: 24826855.9
(22) Date of filing: 18.06.2024
(51) Int. Cl.: G06F 15/78

(54) **DATA ACCESS METHOD, MULTI-CHIP CASCADING METHOD AND SYSTEM, DEVICE, AND STORAGE MEDIUM**

(30) Priority: 26.12.2023 CN 202311817227
(71) Applicant: Calterah Semiconductor Technology (Shanghai) Co., Ltd, Shanghai 201210 (CN)
(72) Inventor: WANG, Li, Shanghai 201210 (CN); SHEN, Yang, Shanghai 201210 (CN); SHI, Yiping, Shanghai 201210 (CN)
(74) Representative: Savi, Massimiliano
(86) International application number: PCT/CN2024/099821
(87) International publication number: WO 2025/138639

(57) **Abstract**

Data access and multi-chip cascading methods, systems, a device and a storage medium are disclosed. The method includes: receiving a first data access instruction from a previous-stage chip; determining a new access address according to an access address in the first data access instruction and address space information of a current chip; and after the access address in the first data access instruction is updated to the new access address, sending the updated first data access instruction to a next-stage chip to access target data. Based on an access address planning and updating method proposed in the embodiments of the present application, cross-chip data access in a multi-chip cascading mode can be achieved, and cascaded chipsets with a larger addressable range can be flexibly constructed as needed to meet needs of different products or applications.

## Description

The present application claims priority to Chinese Patent Application No. 2023118172270, entitled "Data Access Method, Multi-chip Cascading Method and System, Device and Storage Medium", filed on December 26, 2023, the contents of which should be regarded as being incorporated herein by reference.

### Technical Field

The present application relates to, but is not limited to, the field of computer chip technologies.

### Background

The scale of chip systems is under development of becoming increasingly large and complex, and an amount of data that various Systems on Chip (SOC's) need to process in specific application scenarios is constantly increasing. It is increasingly difficult for a single chip to meet the needs of increasingly complex application scenarios. Therefore, one of ideas to solve this problem is to build a multi-chip system by connecting a plurality of chips.

Reasonable chip topological structure design and inter-chip data access scheme design directly determine implementation complexity and applicable scenarios of multi-chip systems. How to effectively utilize a plurality of chips to connect them to form a multi-chip cascading system that meets different application requirements and has low implementation complexity has become a direction continuously explored by those skilled in the art.

### Summary

The following is a summary of subject matter described in detail herein. This summary is not intended to limit the scope of protection of the claims.

Embodiments of the present application provide a data access method, a multi-chip cascading method, a system, a device, and a storage medium. Based on the proposed access address planning and updating method, cross-chip data access in a multi-chip cascading mode can be achieved, and cascading chipsets with a larger addressable range can be flexibly constructed as needed to meet needs of different products or applications.

A data access method is provided in the present application. The method includes:
receiving a first data access instruction from a previous-stage chip;
determining a new access address according to an access address in the first data access instruction and address space information of a current chip; and
sending, after the access address in the first data access instruction is updated to the new access address, the updated first data access instruction to a next-stage chip to access target data.

A multi-chip cascading method is further provided in the present application. The method includes:
cascading at least two chips in a linear manner;
wherein the at least two chips include a head chip and a tail chip; each of the at least two chips except for the tail chip corresponds to a next-stage chip; and
each of the at least two chips performs data accessing according to the data access method as described in any embodiment of the present application.

A multi-chip cascading method is further provided in the present application. The method includes:
cascading at least two chips in a ring manner;
wherein the at least two chips include a head chip and a tail chip; each of the at least two chips corresponds to a next-stage chip; and
each of the at least two chips performs data accessing according to the data access method as described in any embodiment of the present application.

A multi-chip cascading method is further provided in the present application. The method includes:
connecting at least two chipsets with a central processing unit in a star manner;
wherein each of the at least two chipsets includes at least two chips, the at least two chips within each chipset are cascaded using the multi-chip cascading method in any embodiment of the present application.

A multi-chip cascading system is further provided in the present application. The system includes:
at least two chips cascaded in a linear manner;
wherein the at least two chips include a head chip and a tail chip; each of the at least two chips except for the tail chip corresponds to a next-stage chip; and
each of the at least two chips performs data accessing according to the data access method as described in any embodiment of the present application.

A multi-chip cascading system is further provided in the present application. The system includes:
at least two chips cascaded in a ring manner;
wherein the at least two chips include a head chip and a tail chip; each of the at least two chips corresponds to a next-stage chip; and
each of the at least two chips performs data accessing according to the data access method as described in any embodiment of the present application.

A multi-chip cascading system is further provided in the present application. The system includes:
a central processing unit and at least two chipsets;
wherein the at least two chipsets are connected with the central processing unit in a star manner;
each of the at least two chipsets includes at least two chips, the at least two chips within each chipset are cascaded using the multi-chip cascading method in any embodiment of the present application.

An electronic device is further provided in the present application. The electronic device includes:
one or more processors;
a storage apparatus configured to store one or more programs;
when the one or more programs are executed by the one or more processors, the one or more processors implement the data access method as described in any one of the embodiments of the present application.

An electronic device is further provided in the present application. The electronic device includes:
one or more processors;
a storage apparatus configured to store one or more programs;
when the one or more programs are executed by the one or more processors, the one or more processors implement the multi-chip cascading method as described in any one of the embodiments of the present application.

A computer-readable storage medium is further provided in the present application, wherein a computer program is stored on the computer-readable storage medium, when the computer program is executed by a processor, the data access method in any one of the embodiments of the present application is implemented.

A computer-readable storage medium is further provided in the present application, wherein a computer program is stored on the computer-readable storage medium, when the computer program is executed by a processor, the multi-chip cascading method of any one of the embodiments of the present application is implemented.

Other features and advantages of the present application will be set forth in the description below, and in part will become apparent from the specification, or may be learned by practice the present application. Other advantages of the present application may be achieved and obtained through solutions described in the specification and drawings.

After the drawings and detailed description are read and understood, other aspects can be understood.

### Brief Description of Drawings

Accompanying drawings are used for providing an understanding of technical solutions of the present application and form a part of the specification, are used for explaining the technical solutions of the present application together with embodiments of the present application, and do not constitute a limitation on the technical solutions of the present application.
FIG. 1 is a flowchart of a data access method according to an embodiment of the present application.
FIG. 2 is a flowchart of another data access method according to an embodiment of the present application.
FIG. 3 is a flowchart of another data access method according to an embodiment of the present application.
FIG. 4 is a flowchart of another data access method according to an embodiment of the present application.
FIG. 5 is a schematic diagram of a structure of cascaded chips in a linear topology according to an embodiment of the present application.
FIG. 6 is a schematic diagram of a structure of cascaded chips in another linear topology according to an embodiment of the present application.
FIG. 7 is a schematic diagram of a structure of cascaded chips in a ring topology according to an embodiment of the present application.
FIG. 8 is a schematic diagram of a structure of cascaded chips in another ring topology according to an embodiment of the present application.
FIG. 9 is a schematic diagram of communication signals between cascaded chips according to an embodiment of the present application.
FIG. 10 is a schematic diagram of a structure of cascaded chips in a linear-star composite topology according to an embodiment of the present application.
FIG. 11 is a schematic diagram of a structure of cascaded chips in a ring-star composite topology according to an embodiment of the present application.
FIG. 12 is a schematic diagram of a structure of cascaded chips in a linear expansion topology according to an embodiment of the present application.
FIG. 13 is a schematic diagram of a structure of cascaded chips in a ring expansion topology according to an embodiment of the present application.
FIG. 14 is a schematic diagram of a structure of cascaded chips in a linear-star composite expansion topology according to an embodiment of the present application.
FIG. 15 is a schematic diagram of a structure of cascaded chips in a ring-star composite expansion topology according to an embodiment of the present application.

### Detailed Description

Multiple embodiments are described in the present application. However, the description is exemplary and unrestrictive. Moreover, it is apparent to those of ordinary skills in the art that there may be more embodiments and implementation solutions within the scope of the embodiments described in the present application. Although many possible combinations of features are shown in the accompanying drawings and discussed in specific implementations, many other combinations of the disclosed features are also possible. Unless expressly limited, any feature or element of any embodiment may be used in combination with, or may replace, any other feature or element in any other embodiment.

In the present application, combinations of features and elements known to those of ordinary skills in the art are included and contemplated. Embodiments, features, and elements already disclosed in the present application may also be combined with any conventional features or elements to form a unique invention scheme defined by claims. Any feature or element in any embodiment may also be combined with a feature or an element from another invention scheme to form another unique invention scheme defined by the claims. Accordingly, it should be understood that any of the features shown and/or discussed in the present application may be implemented alone or in any suitable combination. Thus the embodiments are not subject to limitations other than those made in accordance with appended claims and their equivalents thereof. In addition, various modifications and changes can be made within the protection scope of the appended claims.

Further, when describing representative embodiments, a method and/or process may have been presented as steps in a particular sequence in the specification. However, to an extent that the method or process does not depend on the particular sequence of the steps herein, the method or process should not be limited to the steps in the particular sequence. Those of ordinary skills in the art will understand that other sequences of steps may also be possible. Therefore, the particular sequence of the steps illustrated in the specification should not be interpreted as a limitation on claims. In addition, the claims directed to the method and/or process should not be limited to performing the steps according to the sequence described. Those skilled in the art may easily understand that these sequences may be changed, and are still maintained in the essence and scope of the embodiments of the present application.

It should be noted that, descriptions such as those related to "first", "second" in embodiments of the present application are for descriptive purposes only and cannot be understood as indicating or implying their relative importance or imply a quantity of technical features indicated. Thus, the feature defined with "first", "second" may explicitly or implicitly include at least one feature. In the description of the present invention, "a plurality of" means at least two, e.g. two, three, etc., unless expressly specified otherwise.

Chip design is basically oriented to single-chip operating scenarios. With increasingly application complexity, requirements on chip processing capabilities, chip capacities, and addressable ranges are increasing rapidly, and configurations of chips needs to be continuously expanded. However, different products or applications have different requirements on the chip processing capabilities and chip capacities. A single-chip solution with extension and high configurations is not conducive to effectively controlling chip costs, product dimensions and product costs. A data access method is provided in an embodiment of the present application, which achieves cross-chip addressing and data accessing based on a cascade topology of chips, can flexibly and simply achieve a cascade combination of a plurality of chips from single chips, and builds a cascaded chipset that meets requirements for different configuration with basic single chips, so as to meet various product specifications or application requirements.

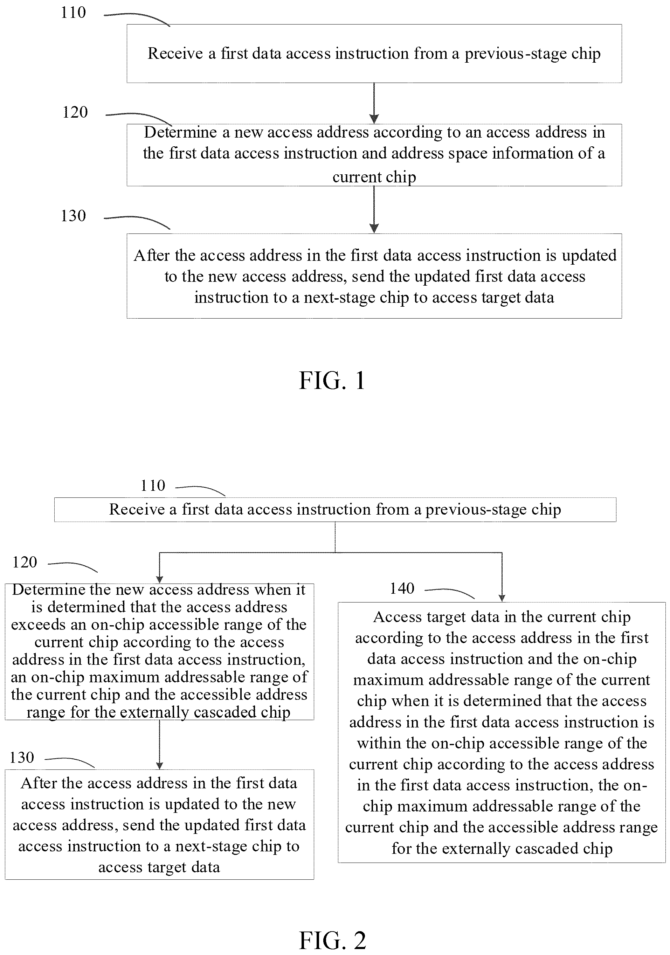

A data access method is provided in an embodiment of the present application. As shown in FIG. 1, the data access method includes steps 110 to 130.

In the step 110, a first data access instruction from a previous-stage chip is received.

In the step 120, a new access address is determined according to an access address in the first data access instruction and address space information of a current chip.

In the step 130, after the access address in the first data access instruction is updated to the new access address, the updated first data access instruction is sent to a next-stage chip to access target data.

It should be noted that, in the embodiment of the present application, the first data access instruction and a second data access instruction are different types of data access instructions for the current chip. Terms "first" and "second" are relative concepts, which refer to two types of data access instructions from different perspectives. The first data access instruction comes from another external chip and is a data access instruction sent by the another external chip to the current chip, and the second data access instruction is a data access instruction initiated by the current chip itself. For the current chip, the second data access instruction may also be sent to a cascaded external chip, and after the second data access instruction is sent, the sent instruction acts as the first data access instruction for the external chip that receives the instruction.

In some exemplary embodiments, the address space information includes an on-chip maximum addressable range and an accessible address range for externally cascaded chip.

In some exemplary embodiments, the on-chip maximum addressable range includes an accessible address range for externally cascaded chip.

The on-chip maximum addressable range means that if the access address is within the on-chip maximum addressable range, addressing is performed within the chip, and if the access address exceeds the on-chip maximum addressable range, an error is reported or addressing is performed on another chips. It should be noted that a specific spatial address within the on-chip maximum addressable range is determined by the chip according to design needs of the current chip. All addresses may be allocated for use, or a part of addresses may be temporarily not allocated for use, which is not limited to specific aspects.

The accessible address range for externally cascaded chip means that addresses within this range are allowed to be accessed by an external chip, and a range of the addresses is included within the on-chip maximum addressable range.

It should be noted that, the data access method described in the present application is proposed for achieving cascade connection of a plurality of chips, and the plurality of cascaded chips can expand address space. A part of an address space accessible by the current chip is its own on-chip address space, and another part of the address space accessible by the current chip is a sum of accessible address spaces of externally cascaded chips of the current chip. For example, if the current chip is denoted as N0, its on-chip maximum addressable range is from hexadecimal 0x0000_0000 to 0x7FFF_FFFF, and an accessible address range of each of eight externally cascaded chips N1 to N8 is from hexadecimal 0x0000_0000 to 0x0FFF_FFFF, then a maximum address range accessible by the chip N0 is from hexadecimal 0x0000_0000 to 0xFFFF_FFFF, wherein the chip N0 performs addressing from hexadecimal 0x0000_0000 to 0x7FFF_FFFF within the chip itself, and the chip N0 performs addressing from hexadecimal 0x8000_0000 to 0xFFFF_FFFF in the accessible address ranges externally provided by the chips N1 to N8 respectively. At that time, a bit width of the access address is 32 bits, and whether data access is performed within the chip or externally is determined according to MSB (Most Significant Bit) four bits. If the MSB four bits is smaller than hexadecimal 0x8, the addressing is performed within the chip. If the MSB four bits is greater than or equal to hexadecimal 0x8, the addressing is performed externally.

The on-chip maximum addressable range can be defined as an upper threshold value (e.g. hexadecimal 0x8000_0000), which indicates that an access address smaller than the upper threshold value of hexadecimal 0x8000_0000 is addressed within the chip. Or, the on-chip maximum addressable range may be defined as a start address and an end address (e.g. from hexadecimal 0x0000_0000 to 0x7FFF_FFFF), which indicates that all access addresses within a range from the start address to the end address are addressed within the chip. Specifically defined forms thereof are not limited to aspects in examples of the present application.

The accessible address range for externally cascaded chip may be defined as an upper threshold value (e.g. hexadecimal 0x1000_0000), which indicates that an access address smaller than the upper threshold value of hexadecimal 0x1000_0000 is an address space in the current chip that can be accessed by an external chip. Or, the accessible address range for externally cascaded chip may be defined as a start address and an end address (e.g. from hexadecimal 0x0000_0000 to 0x0FFF_FFFF), which indicates access addresses within a range from the start address to the end address are an address space in the current chip that can be accessed by an external chip.

In some exemplary embodiments, the accessible address range for externally cascaded chip at most equals to the on-chip maximum addressable range.

In some exemplary embodiments, the accessible address range for externally cascaded chip is within a low address range of the on-chip maximum addressable range. Here, the low address refers to an address with a small address value. For example, the on-chip maximum addressable range is from hexadecimal 0x0000_0000 to 0x7FFF_FFFF, where a range from hexadecimal 0x0000_0000 to 0x0FFF_FFFF is the accessible address range for externally cascaded chip. The accessible address range for externally cascaded chip corresponds to an address offset. For example, the accessible address range for externally cascaded chip is from hexadecimal 0x0000_0000 to 0x0FFF_FFFF, which corresponds to an address offset of hexadecimal 0x1000_0000.

It should be noted that, the other address range of hexadecimal 0x1000_0000 to 0x7FFF_FFFF included in the on-chip maximum addressable range may be accessed by another instruction generated by the current chip, or may be an address reserved and not allocated for use. The low address refers to an address with a small address value.

In some exemplary embodiments, according to a specific address space planning, within an overall accessible address range, the on-chip maximum addressable range corresponds to a low address range within the overall accessible address range. The on-chip maximum addressable range corresponds to an address offset. For example, the on-chip maximum addressable range of hexadecimal 0x0000_0000 to 0x7FFF_FFFF corresponds to an address offset of hexadecimal 0x8000_0000.

It should be noted that, accessing the target data according to the data access instruction in the embodiment of the present application is not limited to accessing a specific on-chip component, and a memory, a register, a peripheral device, and other components within the chip may be accessed.

In some exemplary embodiments, determining the new access address according to the access address in the first data access instruction and the address space information of the current chip includes:
determining the new access address when it is determined that the access address exceeds an on-chip accessible range of the current chip according to the access address in the first data access instruction, an on-chip maximum addressable range of the current chip and an accessible address range for externally cascaded chip.

In some exemplary embodiments, whether the access address exceeds the on-chip accessible range of the current chip is determined as follows:
subtracting an address offset corresponding to the on-chip maximum addressable range of the current chip from the access address in the first data access instruction to obtain an address difference;
determining that the access address does not exceed the on-chip accessible range of the current chip if the address difference falls into the accessible address range for externally cascaded chip of the current chip; and
determining that the access address exceeds the on-chip accessible range of the current chip if the address difference does not fall into the accessible address range for externally cascaded chip of the current chip.

For example, the on-chip maximum addressable range of the current chip is from hexadecimal 0x0000_0000 to 0x7FFF_FFFF, whose corresponding offset is hexadecimal 0x8000_0000. The accessible address range for externally cascaded chip is from hexadecimal 0x0000_0000 to 0x0FFF_FFF, whose corresponding offset is hexadecimal 0x1000_ 0000. The access address in the first data access instruction is 0x9100_0000, the access address of hexadecimal 0x9100_0000 minus the offset of hexadecimal 0x8000_0000 equals to hexadecimal 0x1100_0000 that does not fall into the accessible address range for externally cascaded chip of hexadecimal 0x0000_0000 to 0x0FFF_FFF, it is determined that the access address of hexadecimal 0x9100_0000 exceeds the on-chip accessible range of the current chip, and a new access address is determined. The access address in the first data access instruction is hexadecimal 0x8100_0000, the access address of hexadecimal 0x8100_0000 minus the offset of hexadecimal 0x8000_0000 equals to hexadecimal 0x0100_0000 that falls into the accessible address range for externally cascaded chip of hexadecimal 0x0000_0000 to 0x0FFF_FFF, it is determined that the access address of hexadecimal 0x8100_0000 does not exceed the on-chip accessible range of the current chip (i.e., is within the on-chip accessible range of the current chip).

In some exemplary embodiments, as shown in FIG. 2, the method further includes a step 140.

In the step 140, target data in the current chip are accessed according to the access address in the first data access instruction and the on-chip maximum addressable range of the current chip when it is determined that the access address in the first data access instruction is within the on-chip accessible range of the current chip according to the access address in the first data access instruction, the on-chip maximum addressable range of the current chip and the accessible address range for externally cascaded chip.

In some exemplary embodiments, accessing the target data in the current chip according to the access address in the first data access instruction and the on-chip maximum addressable range of the current chip includes:
obtaining an on-chip access address by subtracting an address offset corresponding to the on-chip maximum addressable range of the current chip from the access address in the first data access instruction, and accessing the target data in the current chip.

For example, if the access address in the first data access instruction is hexadecimal 0x8100_0000, the access address in the first data access instruction of hexadecimal 0x8100_0000 minus the offset of hexadecimal 0x8000_0000 equals to hexadecimal 0x0100_0000 that falls into the accessible address range for externally cascaded chip of hexadecimal 0x0000_0000 to 0x0FFF_FFF, then it is determined that the access address of hexadecimal 0x8100_0000 does not exceed the on-chip accessible range of the current chip. That is, the access address of hexadecimal 0x8100_0000 is within the on-chip accessible range of the current chip, and the target data is accessed in the current chip. The access address in the first data access instruction of hexadecimal 0x8100_0000 minus the offset of hexadecimal 0x8000_0000 equals to an on-chip access address of hexadecimal 0x0100_0000, and addressing is performed within the current chip according to the on-chip access address of hexadecimal 0x0100_0000 to access the target data.

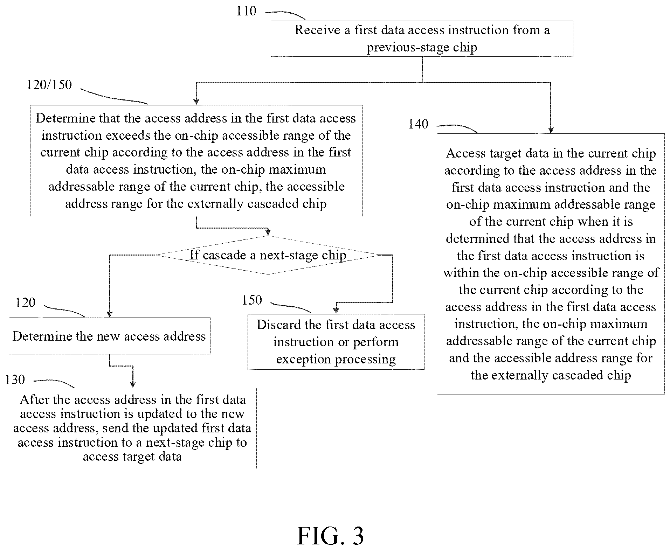

In some exemplary embodiments, as shown in FIG. 3, the method further includes a step 150.

In the step 150, the first data access instruction is discarded or exception processing is performed when it is determined that the access address in the first data access instruction exceeds the on-chip accessible range of the current chip according to the access address in the first data access instruction, the on-chip maximum addressable range of the current chip, the accessible address range for externally cascaded chip, and no next-stage chip being cascaded with the current chip.

For example, if the access address in the first data access instruction is hexadecimal 0x9100_0000, the access address in the first data access instruction of hexadecimal 0x9100_0000 minus the offset of hexadecimal 0x8000_0000 equals to hexadecimal 0x1100_0000 that does not fall into the accessible address range for externally cascaded chip of hexadecimal 0x0000_0000 to 0x0FFF_FFF, it is determined that the access address of hexadecimal 0x9100_0000 exceeds the on-chip accessible range of the current chip, then the data access instruction is discarded or exception processing is performed if no next-stage chip is cascaded with the current chip.

In some exemplary embodiments, the new access address in the step 130 is determined as follows:
the new access address is obtained by subtracting an address offset corresponding to the accessible address range for externally cascaded chip of the current chip from the access address in the received first data access instruction.

That is, AddNew = Address - AddOffset;
where AddNew is the new access address, Address is the access address in the received first data access instruction, and AddOffset is the address offset corresponding to the accessible address range for externally cascaded chip of the current chip.

For example, the access address in the first data access instruction is hexadecimal 0x9100_0000, if the access address of hexadecimal 0x9100_0000 minus the offset of hexadecimal 0x8000_0000 equals to 0x1100_0000 that does not fall into the accessible address range for externally cascaded chip of hexadecimal 0x0000_0000 to 0x0FFF_FFF, it is determined that the access address of hexadecimal 0x9100_0000 exceeds the on-chip accessible range of the current chip, and the access address in the first data access instruction is changed to a new access address calculated as follow: 0x9100_0000 - 0x1000_0000 = 0x8100_0000, and then the first data access instruction is sent to the next-stage chip.

In some exemplary embodiments, sending the updated first data access instruction to the next-stage chip to access the target data includes:
in a first mode, the current chip sends the updated first data access instruction to the next-stage chip to access the target data;
   or,
in a second mode, the current chip sends the updated first data access instruction to the next-stage chip to access the target data after performing a handshake with the next-stage chip;
   or,
in a third mode, the current chip sends a corresponding data block transmission instruction to the next-stage chip to access the target data, according to the updated first data access instruction.

The first mode is also referred to as direct forwarding transmission, the second mode is referred to as handshake communication transmission, and the third mode is also referred to as data block transmission. That is, data between chips may be transmitted in any one of the three above-mentioned modes. It can be understood that the direct forwarding transmission mode has a relatively high bit error rate, and the handshake transmission mode has a relatively low bit error rate. Therefore, the data block transmission mode is more suitable for transmitting a large volume of data. A required transmission mode may be selected according to needs of data transmission, and is not limited to a specific mode.

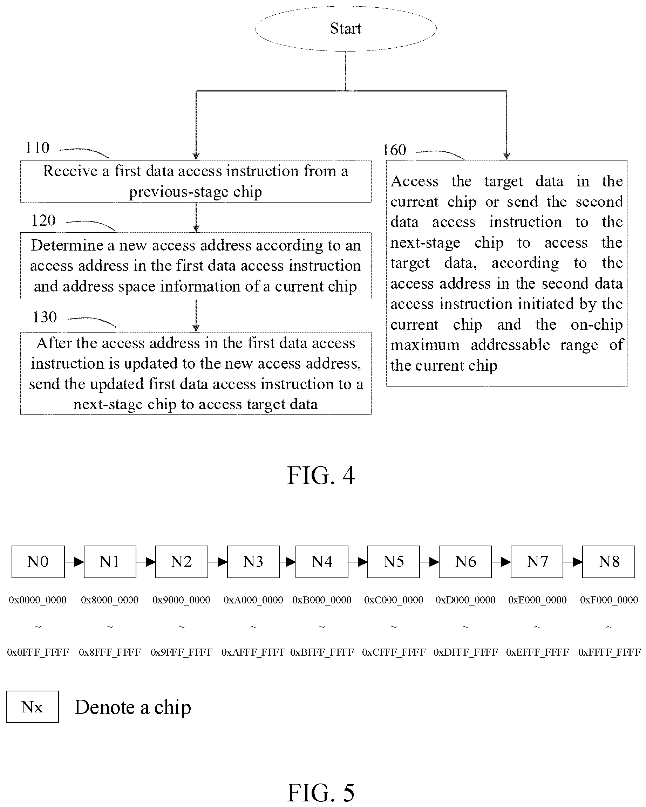

In some exemplary embodiments, as shown in FIG. 4, the method further includes a step 160.

In the step 160, the target data is accessed in the current chip or the second data access instruction is sent to the next-stage chip to access the target data, according to the access address in a second data access instruction initiated by the current chip and the on-chip maximum addressable range of the current chip.

In some exemplary embodiments, the step 160 includes:
sending the second data access instruction initiated by the current chip to a next-stage chip to access the target data when it is determined that the access address in the second data access instruction exceeds the on-chip maximum addressable range of the current chip according to the access address in the second data access instruction and the on-chip maximum addressable range of the current chip;
   or,
accessing the target data in the current chip according to the access address in the second data access instruction initiated by the current chip when it is determined that the access address in the second data access instruction is within the on-chip maximum addressable range of the current chip according to the access address in the second data access instruction and the on-chip maximum addressable range of the current chip.

For example, the access address in the second data access instruction is hexadecimal 0x7100_0000 and the on-chip maximum addressable range of the current chip N0 is from hexadecimal 0x0000_0000 to 0x7FFF_FFFF, if the access address in the second data access instruction of hexadecimal 0x7100_0000 is within the on-chip maximum addressable range of the current chip N0, then the target data in the current chip is accessed according to the access address of hexadecimal 0x7100_0000. As another example, the access address in the second data access instruction is hexadecimal 0x8100_0000 and the on-chip maximum addressable range of the current chip is from hexadecimal 0x0000_0000 to 0x7FFF_FFFF, the access address in the second data access instruction of hexadecimal 0x8100_0000 exceeds the on-chip maximum addressable range of the current chip, then the second data access instruction is sent to a next-stage cascaded chip N1. It can be understood that for the chip N0, the data access instruction is a data access instruction initiated by the chip N0 itself, and is a second data access instruction. For the chip N1, the data access instruction is an instruction from the previous-stage chip N0, and is a first data access instruction.

It can be understood that the current chip returns a response to the previous-stage chip after the current chip completes a corresponding local access or receives a response from the next-stage chip according to the received first data access instruction. After completing the corresponding local access or receiving the response from the next-stage chip according to the second data access instruction, the current chip performs subsequent processing accordingly. Based on this criterion, according to the solution provided in the embodiments of the present application, each chip in a plurality of cascaded chips can achieve on-chip data access or cross-chip data access.

It can be understood that according to the data access method provided in the embodiments of the present application, for a plurality of cascaded chips, based on a planned address space, each cascaded chip implements target data accessing according to corresponding data access instruction processing rules for the second data access instruction initiated by the cascaded chip itself and the first data access instruction from another external chip. A cascade structure can be flexibly configured on demand to achieve a simple and unified logic.

A multi-chip cascading method is further provided in an embodiment of the present application. The method includes:
cascading at least two chips in a linear manner;
wherein the at least two chips include a head chip and a tail chip; each of the at least two chips except for the tail chip corresponds to a next-stage chip; and
each of the at least two chips performs data accessing according to a method as described in any embodiment of the present application.

In other words, in the linear cascading manner, no previous-stage chip is connected with the head chip, no next-stage chip is connected with the tail chip, and each of the other chips is connected with a previous-stage chip and a next-stage chip correspondingly.

In some exemplary embodiments, each of the cascaded chips has a same specification, and each chip has same address space information.

In some exemplary embodiments, each of the cascaded chips has a specification different from specifications of the other cascaded chips. Chips of different specifications have different address space information.

In some exemplary embodiments, as shown in FIG. 5, nine chips are cascaded in a linear manner, and are identical chips N0 to N8. An on-chip maximum addressable range of the chip N0 is from hexadecimal 0x0000_0000 to 0x7FFF_FFFF, wherein a range from hexadecimal 0x0000_0000 to 0x0FFF_FFFF is actually allocated for use, and other addresses are reserved and not allocated for use. Each of the chips N1 to N8 has the on-chip maximum addressable range from hexadecimal 0x0000_0000 to 0x7FFF_FFFF, wherein a range from hexadecimal 0x0000_0000 to 0x0FFF_FFFF is actually allocated for use, and other addresses are reserved and not allocated for use. Therefore, externally cascaded chips can access the address range from hexadecimal 0x0000_0000 to 0x0FFF_FFFF.

For the chip N0, on-chip data is accessed according to the address space from hexadecimal 0x0000_0000 to 0x0FFF_FFFF, the external first-stage chip N1 is accessed according to an address space from hexadecimal 0x8000_0000 to 0x8FFF_FFFF, the external second-stage chip N2 is accessed according to an address space from hexadecimal 0x9000_0000 to 0x9FFF_FFFF, the external third-stage chip N3 is accessed according to an address space from hexadecimal 0xA000_0000 to 0xAFFF_FFFF, the external fourth-stage chip N4 is accessed according to an address space from hexadecimal 0xB000_0000 to 0xBFFF_FFFF, the external fifth-stage chip N5 is accessed according to an address space from hexadecimal 0xC000_0000 to 0xCFFF_FFFF, the external sixth-stage chip N6 is accessed according to an address space from 0xD000_0000 to 0xDFFF_FFFF, the external seventh-stage chip N7 is accessed according to an address space from hexadecimal 0xE000_0000 to 0xEFFF_FFFF, and the external eighth-stage chip N8 is accessed according to an address space from hexadecimal 0xF000_0000 to 0xFFFF_FFFF.

For the chip N0, a chip address space is divided for the chips N0 to N8 as shown in Table 1:

**Table 1 Division of chip address space**

| Chip | Address space |
|---|---|
| Chip N0 | 0X0000_0000 to 0x0FFF_FFFF |
| Chip N1 | 0x8000_0000 to 0x8FFF_FFFF |
| Chip N2 | 0x9000_0000 to 0x9FFF_FFFF |
| Chip N3 | 0xA000_0000 to 0xAFFF_FFFF |
| Chip N4 | 0xB000_0000 to 0xBFFF_FFFF |
| Chip N5 | 0xC000_0000 to 0xCFFF_FFFF |
| Chip N6 | 0xD000_0000 to 0xDFFF_FFFF |
| Chip N7 | 0xE000_0000 to 0xEFFF_FFFF |
| Chip N8 | 0xF000_0000 to 0xFFFF_FFFF |

Each of the chips N1 to N8 receives a first data access instruction sent by a previous-stage chip, subtracts the address offset of hexadecimal 0x8000_0000 corresponding to its on-chip maximum addressable range according to its access address, accesses the chip locally according to a result of subtraction if the result is within the accessible address range for externally cascaded chip of hexadecimal 0x0000_0000 to 0x0FFF_FFFF, or calculates a new access address = the received access address minus the address offset of hexadecimal 0x1000_0000 corresponding to the accessible address range for externally cascaded chip if the result of subtraction exceeds the accessible address range of hexadecimal 0x0000_0000 to 0x0FFF_FFFF for the externally cascaded chip, and sends to the next-stage chip the first data access instruction in which the access address has been updated.

For example, the chip N0 initiates a second data access instruction with an access address of hexadecimal 0x9100_0000, and executes the step 160 to send the second data access instruction to the next-stage chip N1. The chip N1 executes the step 110 to receive a first data access instruction with the access address of hexadecimal 0x9100_0000, executes the step 120 to determine that a new access address is hexadecimal 0x8100_0000, and continues to execute the step 130 to update the access address of the first data access instruction to hexadecimal 0x8100_0000, and send the first data access instruction with the updated access address to the next-stage chip N2. The chip N2 executes the step 110 to receive the first data access instruction with the access address hexadecimal 0x8100_0000, executes the step 140 to determine that the access address of hexadecimal 0x8100_0000 is within the on-chip accessible range of the current chip N2, calculates 0x8100_0000 - 0x8000_0000 = 0x0100_0000 as the on-chip access address obtained, and accesses target data in the chip N2 according to hexadecimal 0x0100_0000. That is, the chip N0 initiates the second data access instruction with the access address of hexadecimal 0x9100_0000, and finally acquires the target data from the chip N2.

In a linear connection, only a front-stage chip can access a rear-stage chip, and the rear-stage chip cannot access the front-stage chip. An access relationship of chips is shown in Table 2. The chip N0 can access all of its rear-stage chips N1 to N8, the chip N1 can access all of its rear-stage chips N2 to N8, the chip N2 can access all of its rear-stage chips N3 to N8, the chip N3 can access all of its rear-stage chips N4 to N8, the chip N4 can access all of its rear-stage chips N5 to N8, the chip N5 can access all of its rear-stage chips N6 to N8 thereafter, the chip N6 can access its rear-stage chips N7 and N8, and the chip N7 can access its rear-stage chip N8, and the chip N8 can access itself only.

**Table 2 Access relationship of chips in a linear connection**

| Chip | Accessible external chip(s) |
|---|---|
| Chip N0 | N1, N2, N3, N4, N5, N6, N7, N8 |
| Chip N1 | N2, N3, N4, N5, N6, N7, N8 |
| Chip N2 | N3, N4, N5, N6, N7, N8 |
| Chip N3 | N4, N5, N6, N7, N8 |
| Chip N4 | N5, N6, N7, N8 |
| Chip N5 | N6, N7, N8 |
| Chip N6 | N7, N8 |
| Chip N7 | N8 |
| Chip N8 | None |

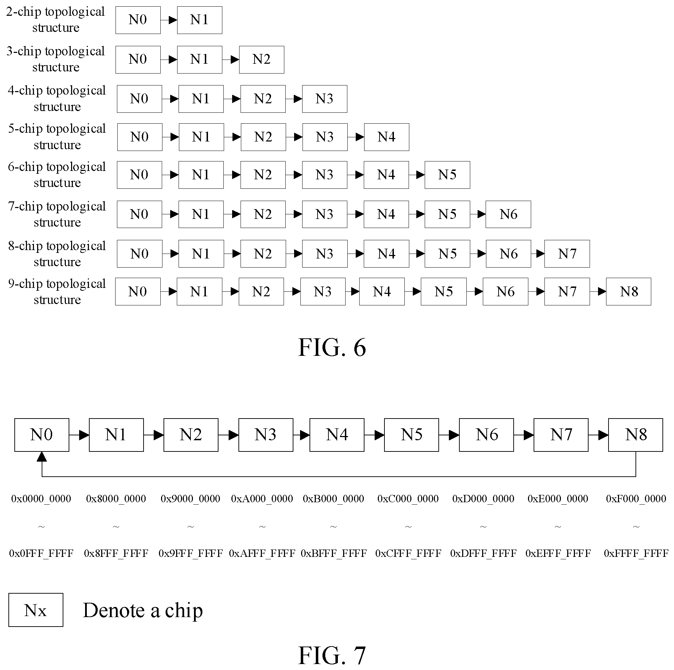

In some exemplary embodiments, there are eight linear topological structures in total for the chips N0 to N8, according to a quantity of connected chips. As shown in FIG. 7, these topological structures are the same as those in FIG. 5, in which a front-stage chip can access a rear-stage chip.

In some exemplary embodiments, a bit width of the access address is 32 bits, and whether data accessing is performed within the chip or externally is determined according to MSB (Most Significant Bit) two bits. If the MSB two bits is smaller than hexadecimal 0x1, the addressing is performed within the chip. If the MSB two bits is greater than or equal to hexadecimal 01, the addressing is performed externally. The on-chip maximum addressable range of hexadecimal 0x0000_0000 to 0x3FFF_FFFF corresponds to an address offset of hexadecimal 0x4000_0000. A range from hexadecimal 0x0000_0000 to 0x3FFF_FFFF is actually allocated for use, the accessible address range for externally cascaded chip is from hexadecimal 0x0000_0000 to 0x3FFF_FFFF, and its corresponding address offset is hexadecimal 0x4000_0000. Four chips N0 to N3 are cascaded. For the chip N0, a chip address space is divided for the chips N0 to N3 as shown in Table 3:

**Table 3 Division of chip address space**

| Chip | Address space |
|---|---|
| Chip N0 | 0X0000_0000 through 0x3FFF_FFFF |
| Chip N1 | 0x4000_0000 through 0x7FFF_FFFF |
| Chip N2 | 0x8000_0000 through 0xBFFF_FFFF |
| Chip N3 | 0xC000_0000 through 0xFFFF_FFFF |

It can be understood that a detailed addressing process is performed within the chip or externally according to the MSB bits of the addressing address, which can be flexibly determined according to the design needs, and no more examples will be discussed in detail here.

A multi-chip cascading method is further provided in an embodiment of the present application. The method includes:
cascading at least two chips in a ring manner;
wherein the at least two chips include a head chip and a tail chip; each of the at least two chips corresponds to a next-stage chip; and
each of the chips performs data accessing according to the data access method described in any embodiment of the present application.

In other words, each of chips cascaded in a ring manner is correspondingly connected to a previous-stage chip and a lower-stage chip, and a head chip and a tail chip of the chips are connected. The head chip and the tail chip are relatively defined in the ring structure, and each node in the ring structure can be used as a head chip or a tail chip.

In some exemplary embodiments, each of the cascaded chips has a same specification, and each chip has same address space information.

In some exemplary embodiments, each of the cascaded chips has a specification different from specifications of the other cascaded chips. Chips of different specifications have different address space information.

In some exemplary embodiments, as shown in FIG. 7, nine chips are cascaded in a ring manner, and are identical chips N0 to N8. For each of the chips N0 to N8, its on-chip maximum addressable range is from hexadecimal 0x0000_0000 to 0x7FFF_FFFF, wherein an address range from hexadecimal 0x0000_0000 to 0x0FFF_FFFF is actually allocated for use, other addresses are reserved and not allocated for use, and externally cascaded chips can access an address range from hexadecimal 0x0000_0000 to 0x0FFF_FFFF.

In the ring connection shown in FIG. 7, all chips are connected into a ring. At that time, all chips are considered equal in terms of connectivity, with no distinction between primary and secondary. Each chip can initiate access to any chip externally. At that time, an access relationship of the chips is shown in Table 4.

**Table 4 Access relationship of chips connected in a ring manner**

| Chip | Accessible external chip |
|---|---|
| Chip N0 | N1, N2, N3, N4, N5, N6, N7, N8 |
| Chip N1 | N2, N3, N4, N5, N6, N7, N8, N0 |
| Chip N2 | N3, N4, N5, N6, N7, N8, N0, N1 |
| Chip N3 | N4, N5, N6, N7, N8, N0, N1, N2 |
| Chip N4 | N5, N6, N7, N8, N0, N1, N2, N3 |
| Chip N5 | N6, N7, N8, N0, N1, N2, N3, N4 |
| Chip N6 | N7, N8, N0, N1, N2, N3, N4, N5 |
| Chip N7 | N8, N0, N1, N2, N3, N4, N5, N6 |
| Chip N8 | N0, N1, N2, N3, N4, N5, N6, N7 |

For the chip N0, the chips N1, N2, N3, N4, N5, N6, N7, N8 can be accessed according to arrows shown in FIG. 7. The chip N1 can access the chips N2, N3, N4, N5, N6, N7, N8, N0 according to the arrows shown in FIG. 7. The chip N2 can access the chips N3, N4, N5, N6, N7, N8, N0, N1 according to the arrows shown in FIG. 7. The chip N3 can access the chips N4, N5, N6, N7, N8, N0, N1, N2 according to the arrows shown in FIG. 7. The chip N4 can access the chips N5, N6, N7, N8, N0, N1, N2, N3 according to the arrows shown in FIG. 7. The chip N5 can access the chips N6, N7, N8, N0, N1, N2, N3, N4 according to the arrows shown in FIG. 7. The chip N6 can access the chips N7, N8, N0, N1, N2, N3, N4, N5 according to the arrows shown in FIG. 7. The chip N7 can access the chips N8, N0, N1, N2, N3, N4, N5, N6 according to the arrows shown in FIG. 7. The chip N8 can access the chips N0, N1, N2, N3, N4, N5, N6, N7 according to the arrows shown in FIG. 7.

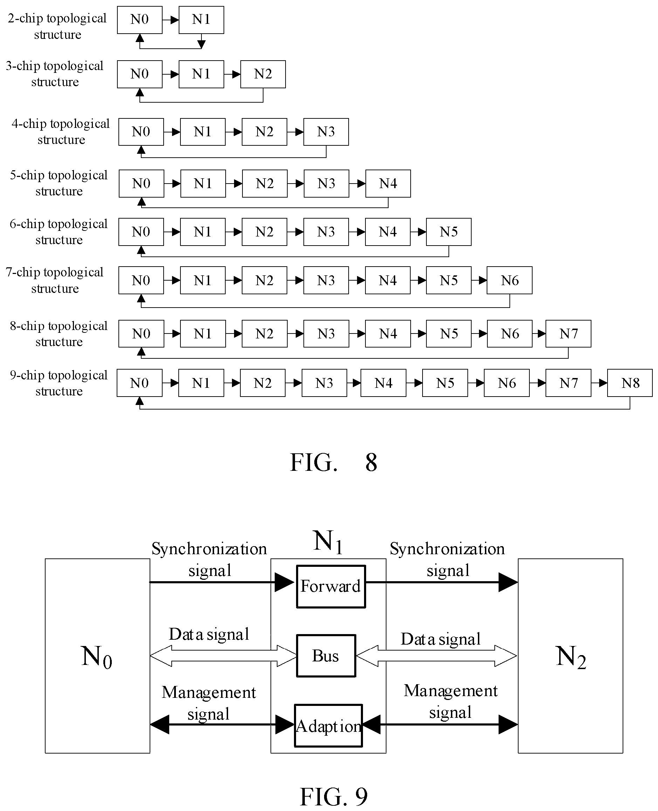

In some exemplary embodiments, there are eight ring topological structures in total for the chips N0 to N8 according to a quantity of connected chips. As shown in FIG. 8, these structures are the same as those in FIG. 7, and each chip can initiate an access to any external chip.

In some exemplary embodiments, as shown in FIG. 9, signals between cascaded chips belong to the following types: a synchronization signal, a data signal, and a low-speed management signal. The synchronization signal is configured to coordinate synchronous operation of a plurality of chips. The data signal provides data transmission between chips, and has a relatively high data transmission rate, also known as a high-speed data signal. The management signal is configured to manage operation of a high-speed link and each chip, and has a relatively low data transmission rate in comparison, also known as a low-speed management signal.

It can be seen that each of the chips is connected with a next-stage chip through a cascading signal. The synchronization signal is transmitted to the next-stage chip by a forwarding mechanism. A pulse level synchronization signal is output to the next-stage chip by an added amplifier, and a radio frequency synchronization signal is also output to a next-stage chip by the amplifier. The data signal forwards data to the next-stage chip through a next-stage on-chip bus. Signal lines are connected through the management signal by adaption. When using an I2C (Inter-Integrated Circuit, a serial communication interface between integrated circuits) protocol, only an I2C slave in this chip is needed to be connected to the bus through an open-drain transmission pipe. At the same time, the bus is connected to a pull-up resistor. In this signal connection mode, chips need to be connected in pairs only to form a system.

In FIG. 9, functional safety characteristics of a chip topology system can be enhanced by a management signal. Before transmitting in a data signal path, the data signal path is trained by the management signal to obtain a best configuration, and then starts data transmission. During data transmission, CRC (Cyclic Redundancy Check Code) is added. During the data transmission, the receiver receives data for verification. If the verification fails, the transmitter is informed by management information to retransmit.

A multi-chip cascading method is further provided in an embodiment of the present application, and the method includes:
at least two chipsets are connected with a central processing unit in a star manner;
wherein each chipset includes at least two chips, and at least two chips in each chipset are cascaded in the linear manner as described in the embodiments of the present application or in the ring manner as described in the embodiments of the present application.

A multi-chip cascading system is further provided in an embodiment of the present application, the system includes:
at least two chips cascaded in a linear manner;
wherein the at least two chips include a head chip and a tail chip; each of the at least two chips except for the tail chip corresponds to a next-stage chip; and
each of the at least two chips performs data accessing according to a data access method as described in any embodiment of the present application.

A multi-chip cascading system is further provided in an embodiment of the present application, and the system includes:
at least two chips cascaded in a ring manner;
wherein the at least two chips include a head chip and a tail chip; each of the at least two chips corresponds to a next-stage chip; and
each of the at least two chips performs data accessing according to a data access method as described in any embodiment of the present application.

A multi-chip cascading system is further provided in an embodiment of the present application, and the system includes:
a central processing unit and at least two chipsets;
wherein the at least two chipsets are connected with the central processing unit in a star manner;
wherein each of the chipsets includes at least two chips, and at least two chips in each chipset are cascaded in the linear manner as described in the embodiments of the present application or in the ring manner as described in the embodiments of the present application.

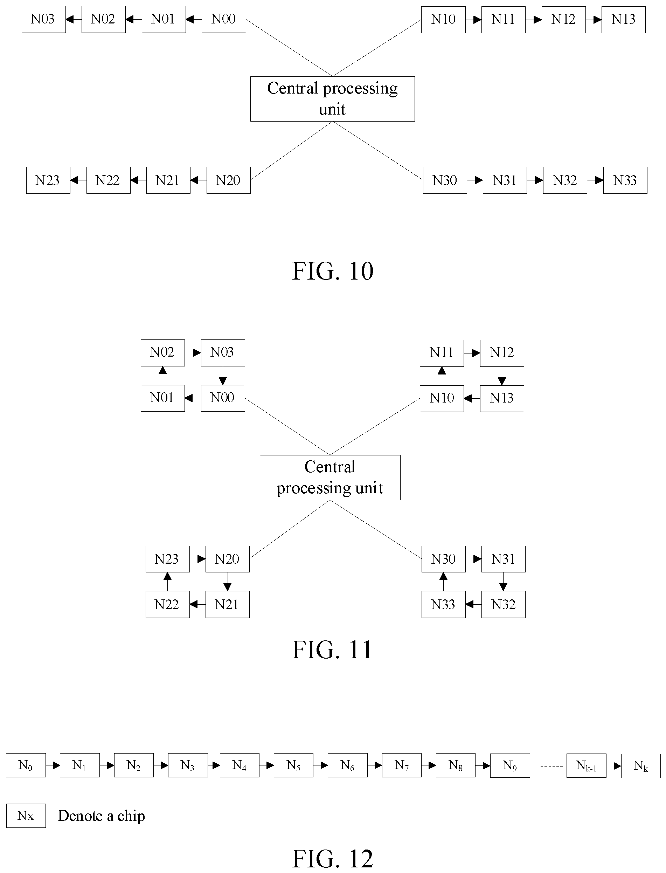

In some exemplary embodiments, as shown in FIG. 10, which illustrates a linear-star composite topological structure, this structure is composed of linear topological structures connected with a central processing unit, wherein the linear topological structures are connected with the central processing unit in other modes, such as Ethernet, CAN bus and the like. FIG. 10 shows an example of a combination of 4-chip lines and a star. Each chipset is of a linear topology composed of a plurality of chips in a same quantity or different quantities. A quantity of linear topologies (i.e., a quantity of chipsets) can also be flexibly configured as needed.

In some exemplary embodiments, as shown in FIG. 11, which illustrates a composite topological structure in which ring shapes and a star shape are combined, this structure is composed of ring topological structures connected with a central processing unit, wherein the ring topological structures are connected with the central processing unit in other modes, such as Ethernet, CAN bus and the like. FIG. 11 shows an example of a combination of 4-chip rings and a star. Each chipset is of a linear topology composed of a plurality of chips in a same quantity or different quantities. A quantity of ring topologies (i.e., a quantity of chipsets) can also be flexibly configured as needed.

It can be understood that different chip connection topological structures may be applied to different systems. The linear topological structures and ring topological structures can be applied to package-level system connections and PCB board-level system connections. A composite star topological structure can be applied to domain system connections, such as indoor system connections, vehicle-mounted system connections, and the like.

A multi-chip cascading system is further provided in an embodiment of the present application, in which more chips are connected by an upper-level software, based on a limited address bit width.

In some exemplary embodiments, as shown in FIG. 12, the chips are connected in a linear extension topology. When the address bit width is 32 bit, chips N9 to Nk are extended chips, wherein N0 can address to access the farthest chip N8 according to the addresses, and can access the chips N9 to Nk by software. Each chip follows this mode. That is, in the data access method provided in the embodiments of the present application, at most eight external chips can be accessed according to the access addresses, and chips subsequent to the eight chips can be accessed by software.

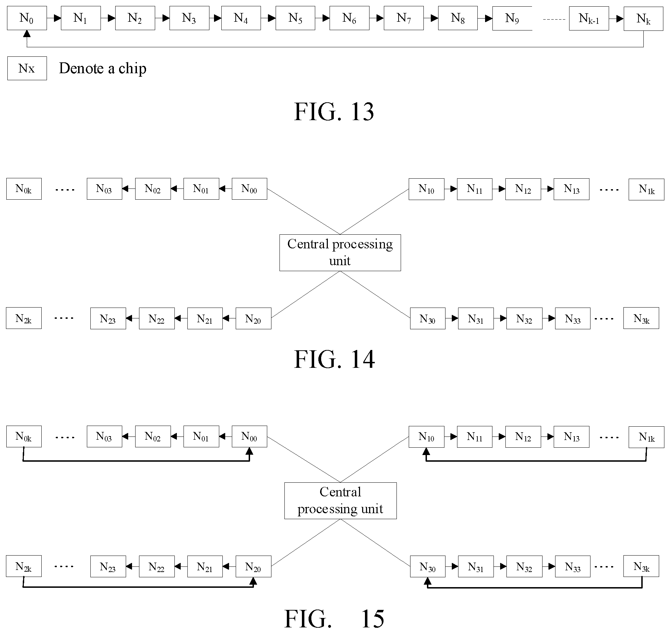

In some exemplary embodiments, as shown in FIG. 13, the chips are connected in a ring extension topology. When the address bit width is 32 bit, chips N9 to Nk are extended chips, wherein N0 can address to access the farthest chip N8 according to the address, and can access the chips N9 to Nk by software. Each chip follows this mode. That is, in the data access method provided in the embodiments of the present application, at most eight external chips can be accessed according to the access addresses, and chips subsequent to the eight chips can be accessed by software.

In some exemplary embodiments, as shown in FIGs. 14 and 15, they illustrate extended topological structures in which the linear topologies in FIG. 12 and the ring topologies in FIG. 13 are combined with the star respectively. Each local topological structure is the same as those in FIGs. 12 and 13. These structures are composed of linear or ring topological structures connected with a central processing unit, wherein the linear or ring topological structures are connected with the central processing unit in other modes, such as Ethernet, CAN bus and the like. Quantities of the linear or ring topological structures in FIGs. 14 and 15 may also be any quantity depending on scenarios.

An electronic device is further provided in an embodiment of the present application. The electronic device includes:
one or more processors;
a storage apparatus for storing one or more programs,
when the one or more programs are executed by the one or more processors, the one or more processors implement the data access method as described in any one of the embodiments of the present application.

An electronic device is further provided in an embodiment of the present application. The electronic device includes:
one or more processors;
a storage apparatus for storing one or more programs,
when the one or more programs are executed by the one or more processors, the one or more processors implement the multi-chip cascading method as described in any one of the embodiments of the present application.

A computer storage medium in which a computer program is stored is further provided in an embodiment of the present application, wherein the computer program is configured to execute the data access method as described in any one of the embodiments of the present application during runtime.

A computer storage medium in which a computer program is stored is also provided in an embodiment of the present application, wherein the computer program is configured to execute the multi-chip cascading method as described in any one of the embodiments of the present application during runtime.

It can be seen that based on an access address planning and updating method proposed in the present application, cross-chip data accessing in a multi-chip cascading mode can be achieved in the data access method, and cascaded chipsets with a larger addressable range can be flexibly constructed as needed to meet needs of different products or applications.

Those of ordinary skills in the art may understand that all or some of steps in the methods disclosed above, systems, functional modules or units in apparatuses may be implemented as software, firmware, hardware, and an appropriate combination thereof. In a hardware implementation, division of the function modules/units mentioned in the above description is not always corresponding to division of physical components. For example, a physical component may have multiple functions, or a function or a step may be executed by several physical components in cooperation. Some components or all components may be implemented as software executed by a processor such as a digital signal processor or a microprocessor, or implemented as hardware, or implemented as an integrated circuit such as a specific integrated circuit. Such software may be distributed on a computer-readable medium, and the computer-readable medium may include a computer storage medium (or a non-transitory medium) and a communication medium (or a transitory medium). As known to those of ordinary skills in the art, the "term computer storage medium" includes volatile or nonvolatile, and removable or irremovable media implemented in any method or technology for storing information (for example, a computer-readable instruction, a data structure, a program module, or other data). The computer storage medium includes, is but not limited to, a Random Access Memory (RAM), a Read-Only Memory (ROM), an Electrically Erasable Programmable ROM (EEPROM), a flash memory or other memory technologies, a Compact Disc Read-Only Memory (CD-ROM), a Digital Video Disk (DVD) or other optical discs, a cassette, a magnetic tape, a disk memory or other magnetic storage apparatuses, or any other medium configurable to store expected information and accessible by a computer. In addition, it is known to those of ordinary skills in the art that the communication medium usually includes a computer-readable instruction, a data structure, a program module, or other data in a modulated data signal of, such as, a carrier or another transmission mechanism, and may include any information delivery medium.

## Claims

1. A data access method comprising:
receiving a first data access instruction from a previous-stage chip;
determining a new access address according to an access address in the first data access instruction and address space information of a current chip; and
after the access address in the first data access instruction is updated to the new access address, sending the updated first data access instruction to a next-stage chip to access target data.

2. The data access method of claim 1, wherein,
the address space information comprises an on-chip maximum addressable range and an accessible address range for externally cascaded chip;
determining the new access address according to the access address in the first data access instruction and the address space information of the current chip comprises:
determining the new access address when it is determined that the access address in the first data access instruction exceeds an on-chip accessible range of the current chip according to the access address in the first data access instruction, the on-chip maximum addressable range of the current chip and the accessible address range for externally cascaded chip.

3. The data access method of claim 2, wherein,
the new access address is determined as follows:
obtaining the new access address by subtracting an address offset corresponding to the accessible address range for externally cascaded chip of the current chip from the access address in the received first data access instruction.

4. The data access method of claim 2, further comprising:
accessing target data in the current chip according to the access address in the first data access instruction and the on-chip maximum addressable range of the current chip when it is determined that the access address in the first data access instruction is within the on-chip accessible range of the current chip according to the access address in the first data access instruction, the on-chip maximum addressable range of the current chip and the accessible address range for externally cascaded chip;
or,
discarding the first data access instruction or performing exception processing when it is determined that the access address in the first data access instruction exceeds the on-chip accessible range of the current chip according to the access address in the first data access instruction, the on-chip maximum addressable range of the current chip and the accessible address range for externally cascaded chip, and no next-stage chip is cascaded with the current chip.

5. The data access method of claim 4, wherein,
accessing the target data in the current chip according to the access address in the first data access instruction and the on-chip maximum addressable range of the current chip comprises:
obtaining an on-chip access address by subtracting an address offset corresponding to the on-chip maximum addressable range of the current chip from the access address in the first data access instruction, and accessing the target data in the current chip.

6. The data access method of any one of claims 1 to 5, wherein,
sending the updated first data access instruction to the next-stage chip to access the target data comprises:
sending, by the current chip, the updated first data access instruction to the next-stage chip to access the target data; or,
sending, by the current chip, the updated first data access instruction to the next-stage chip to access the target data after performing a handshake with the next-stage chip; or,
sending, by the current chip, a corresponding data block transmission instruction to the next-stage chip to access the target data, according to the updated first data access instruction.

7. The data access method of claim 2, further comprising:
accessing target data in the current chip or sending a second data access instruction to the next-stage chip to access the target data, according to an access address in the second data access instruction initiated by the current chip and the on-chip maximum addressable range of the current chip.

8. A multi-chip cascading method comprising:
cascading at least two chips in a linear manner;
wherein the at least two chips comprise a head chip and a tail chip; each of the at least two chips except for the tail chip corresponds to a next-stage chip; and
each of the at least two chips performs data accessing according to the data access method of any one of claims 1 to 7.

9. A multi-chip cascading method comprising:
cascading at least two chips in a ring manner;
wherein the at least two chips comprise a head chip and a tail chip; each of the at least two chips corresponds to a next-stage chip; and
each of the at least two chips performs data accessing according to the data access method of any one of claims 1 to 7.

10. A multi-chip cascading method comprising:
connecting at least two chipsets with a central processing unit in a star manner;
wherein each of the at least two chipsets comprises at least two chips, the at least two chips within each chipset are cascaded using the multi-chip cascading method of claim 8 or 9.

11. A multi-chip cascading system comprising:
at least two chips cascaded in a linear manner;
wherein the at least two chips comprise a head chip and a tail chip; each of the at least two chips except for the tail chip corresponds to a next-stage chip; and
each of the at least two chips is configured to perform data accessing according to the data access method of any one of claims 1 to 7.

12. A multi-chip cascading system comprising:
at least two chips cascaded in a ring manner;
wherein the at least two chips comprise a head chip and a tail chip; each of the at least two chips corresponds to a next-stage chip; and
each of the at least two chips is configured to perform data accessing according to the data access method of any one of claims 1 to 7.

13. A multi-chip cascading system comprising:
a central processing unit and at least two chipsets;
wherein the at least two chipsets are connected with the central processing unit in a star manner; and
each of the at least two chipsets comprises at least two chips, the at least two chips within each chipset are cascaded using the multi-chip cascading method of claim 8 or 9.

14. An electronic device comprising:
one or more processors;
a storage apparatus configured to store one or more programs;
wherein when the one or more programs are executed by the one or more processors, the one or more processors implement the data access method of any one of claims 1 to 7, or implement the multi-chip cascading method of any one of claims 8 to 10.

15. A computer-readable storage medium on which a computer program is stored, wherein when the computer program is executed by a processor, the data access method of any one of claims 1 to 7, or the multi-chip cascading method of any one of claims 8 to 10 is implemented.
